(19) Europäisches Patentamt
European Patent Office
Office européen des brevets

(11) **EP 4 660 726 A1**

(12) **EUROPEAN PATENT APPLICATION**

(43) Date of publication:
**10.12.2025 Bulletin 2025/50**

(21) Application number: **25180872.1**

(22) Date of filing: **04.06.2025**

(51) International Patent Classification (IPC):
**G05B 19/401** (2006.01)

(52) Cooperative Patent Classification (CPC):
**G05B 19/401;** G05B 2219/36404;
G05B 2219/37097; G05B 2219/37222;
G05B 2219/45147

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.06.2024 US 202418733040**

(71) Applicant: **PRATT & WHITNEY CANADA CORP.**
**Longueuil, Québec J4G 1A1 (CA)**

(72) Inventors:
• **ING, Visal**
  **(01BE5) Longueuil, J4G 1A1 (CA)**
• **GUIASSA, Rachid**
  **(01BE5) Longueuil, J4G 1A1 (CA)**

(74) Representative: **Dehns**
  **10 Old Bailey**
  **London EC4M 7NG (GB)**

(54) **METHOD OF MANUFACTURING A PART OF AN AIRCRAFT ENGINE, AND SYSTEM THEREFOR**

(57) The method can include mounting the part (34) on a machining fixture (46), obtaining a geometrical relationship between a machining reference feature (42) of the part (34) and a setup reference feature (40) of the part (34), such as via a 3D model acquired by scanning, measuring a position and orientation of the setup reference feature (40) relative the machining fixture (46), computing a position and orientation of the machining reference feature (42) based on the geometrical relationship and on the measured position and orientation; and machining the target feature (44) of the part (34) relative to the computed position and orientation of the machining feature (42).

FIG. 2

**Description**

TECHNICAL FIELD

The disclosure relates generally to aircraft engines, such as gas turbine engines, and, more particularly, to systems and methods used for manufacturing parts of such aircraft engines by machining.

BACKGROUND OF THE ART

Aircraft engines include a plurality of parts for which the manufacturing process may include machining. In some cases, a machining operation can be relatively straightforward. For instance, a block of material can be set up in a machine (e.g., a Computer Numerical Control (CNC) machine), and all precision features of the part can be machined of a single machining operation, relative to a single coordinate system : the coordinate system of the machine. However, this is not always the case, and in some cases, complex parts may have more than one precision feature, and these precision features may not all be manufacturable as a single operation. For instance, some precision features may result from an earlier casting step, or movement of the part from one fixture to another fixture can lead to challenges in establishing a common coordinate system for precision features of the part.

Various techniques have been devised over the years to address such challenges. While such techniques have been satisfactory to a certain extent, there remains room for improvement.

SUMMARY

In one aspect of the present invention, there is provided a method of manufacturing a target feature of a part of an aircraft powerplant, the method comprising : obtaining a tri-dimensional model of the part; using the tri-dimensional model, determining a geometrical relationship between a machining reference feature of the part and a setup reference feature of the part; mounting the machining reference feature of the part in a machining fixture; measuring a position and orientation of the setup reference feature of the part relative the machining fixture; computing a position and orientation of the machining reference feature based on the measured position and orientation of the setup reference feature and on the geometrical relationship; and machining a target feature of the part relative to the computed position and orientation of the machining reference feature.

In an embodiment of the above, the method further comprises computing a coordinate transformation between the machining reference feature and the setup reference feature, said determining the geometric relationship being based on the coordinate transformation.

In an embodiment according to any of the previous embodiments, the method further comprises obtaining a tri-dimensional model created by scanning the part, the tri-dimensional model of the part including surfaces of the machining reference feature and of the setup reference feature, and wherein said determining the geometrical relationship is based on the tri-dimensional model of the part.

In an embodiment according to any of the previous embodiments, said measuring is performed using a computer measurement machine (CMM) module integrated to a computer numerical command (CNC) machine, said machining is performed using the CNC machine, said measuring is performed using the CMM module, further comprising measuring the target feature of the part using the CMM module, relative to the computed position and orientation of the machining reference feature.

In an embodiment according to any of the previous embodiments, said machining fixture is in a computer numerical command (CNC) machine when performing said measuring, and said machining is performed using the CNC machine.

In an embodiment according to any of the previous embodiments, said machining fixture is located outside a computer numerical command (CNC) machine when performing said mounting, further comprising computing a coordinate transformation between a fixture reference feature and the setup reference feature, mounting the machining fixture with the part into the CNC machine, measuring a position and orientation of the fixture reference feature relative the CNC machine, and wherein said computing a position and orientation of the machining reference feature is further based on the coordinate transformation between the fixture reference feature and the setup reference feature and the measurement of the position and orientation of the machining fixture relative the CNC machine.

In an embodiment according to any of the previous embodiments, said measuring a position and orientation of the setup reference feature includes probing the position of points on a surface of the setup reference feature.

In an embodiment according to any of the previous embodiments, said geometrical relationship is a 4 X 4 coordinate transformation matrix between a coordinate system of the machining reference feature and of a coordinate system of the setup reference feature.

In an embodiment according to any of the previous embodiments, the tri-dimensional model is a partial tri-dimensional model of the part.

In an embodiment according to any of the previous embodiments, the method further comprises extracting a position and orientation of the machine reference feature and of the setup reference feature from the tri-dimensional model.

In an embodiment according to any of the previous embodiments, said mounting the part to a machining fixture includes obstructing access to the machining reference feature.

In another aspect of the present invention, there is provided a method of manufacturing a part, the method comprising : creating a tri-dimensional model of the part in an initial configuration, the creating including scanning the part in the initial configuration, the tri-dimensional model of the part including surfaces of a first feature and of a second feature; determining a coordinate transformation between the first feature and the second feature; mounting the part on a machining fixture; measuring a position and orientation of the second feature relative the machining fixture; determining a coordinate system of the first feature based on the coordinate transformation and on the measured position and orientation of the second feature; and applying the correction to the coordinate system of the CNC machine to match the coordinate system of the first feature.

In an embodiment of the above, the method further comprises machining a target feature of the part based on the corrected coordinate system of the CNC machine.

In an embodiment according to any of the previous embodiments, said measuring is performed using a computer measurement machine (CMM) module integrated to the computer numerical command (CNC) machine, said machining is performed using the CNC machine, further comprising measuring the target feature of the part using the CMM module, relative to the corrected coordinate system of the CNC machine.

In an embodiment according to any of the previous embodiments, said measuring a position and orientation of the second feature includes probing the position of points on a surface of the second feature.

In an embodiment according to any of the previous embodiments, said coordinate transformation is a 4 X 4 transformation matrix between a coordinate system of the first feature and of a coordinate system of the second feature.

In an embodiment according to any of the previous embodiments, the tri-dimensional model is a partial tri-dimensional model of the part.

In an embodiment according to any of the previous embodiments, the method further comprises extracting a position and orientation of the first feature and of the second feature from the tri-dimensional model.

In an embodiment according to any of the previous embodiments, said mounting the part on the machining fixture includes obstructing access to the first feature.

In a further aspect of the present invention, there is provided a system for preparing the machining of a part, the system comprising: a processor; and a non-transitory machine-readable memory operatively connected to the processor, and storing : a coordinate transformation between a machining reference feature and a setup reference feature of a part; a measurement of a position and orientation of the setup reference feature relative a machining fixture; and instructions executable by the processor and configured to cause the processor to: compute a coordinate system of the machining reference feature based on the coordinate transformation and on the measured position and orientation of the setup reference feature; and apply a coordinate transformation a coordinate system of the CNC machine to match the coordinate system of the machining reference feature.

DESCRIPTION OF THE DRAWINGS

Reference is now made to the accompanying figures in which:

Fig. 1 is a schematic cross-sectional view of an exemplary aircraft engine;

Fig. 2 is an three-dimensional view of a CNC machine;

Fig. 3 is an three-dimensional view of an exemplary part, and of a transformation in the coordinate system associated thereto;

Fig. 4 is a schematic view of a coordinate transformation;

Fig. 5 is a schematic view of the process of determining a position and orientation of a second feature relative a first feature of a part;

Fig. 6 is a schematic view of the process of measuring a position and orientation of the second feature relative a machining fixture;

Fig. 7 is a schematic view of a computer;

Fig. 8 is a flow chart of a method of manufacturing a target feature of a part of an aircraft powerplant; and

Fig. 9 is a flow chart of a method of applying a correction to a coordinate system of a CNC machine.

DETAILED DESCRIPTION

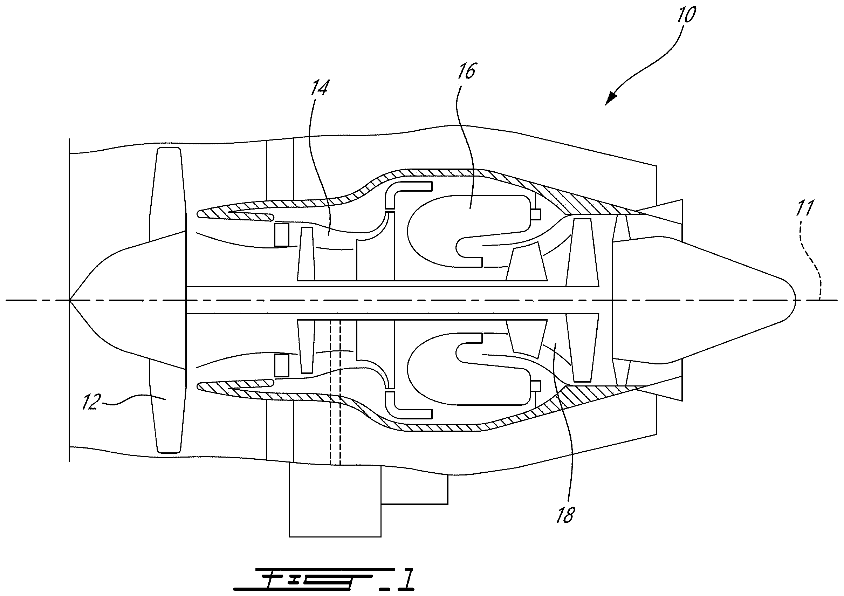

Fig. 1 illustrates an aircraft engine 10 of a type preferably provided for use in subsonic flight. In the depicted embodiment, the aircraft engine 10 is a gas turbine engine generally comprising in serial flow communication a fan 12 through which ambient air is propelled, a compressor section 14 for pressurizing the air, a combustor 16 in which the compressed air is mixed with fuel and ignited for generating an annular stream of hot combustion gases around the engine axis 11, and a turbine section 18 for extracting energy from the combustion gases.

Other types of aircraft powerplants may be used in aviation. Other types of gas turbine powerplants include turboprop engines, turboshaft engines, and auxiliary power units (APUs). Moreover, aircraft hybrid powerplants comprising a combination of electric and thermal engines are contemplated.

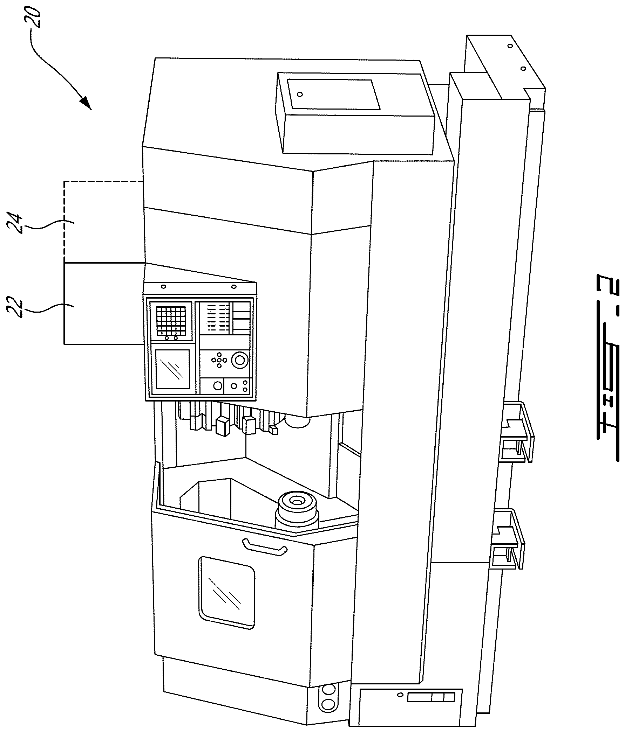

Fig. 2, presents an example of a Computer Numerical Control (CNC) machine 20 of a type which may be used in the production of parts of aircraft powerplants.

A typical CNC machine 20 has a computer typically referred to as a controller, and having a processor configured to execute instructions stored in a non-transitory memory, thereby performing a machining operation. The instructions can define a sequence of machining steps which define cutting tool movements in a coordinate system (e.g., reference frame) of the CNC machine 20, and such instructions can be said to form part of a CNC module 22 of the CNC machine 20. Some CNC machines also have an integrated measurement system such as a computerized measurement machine (CMM) module 24 which can move a probe to determine positions of points of features of a part in the CNC machine 20. The set of instructions defining a sequence of steps to measure the part, together with the associated processing power and other associated hardware, can be referred to as a CMM module 24 of the CNC machine 20.

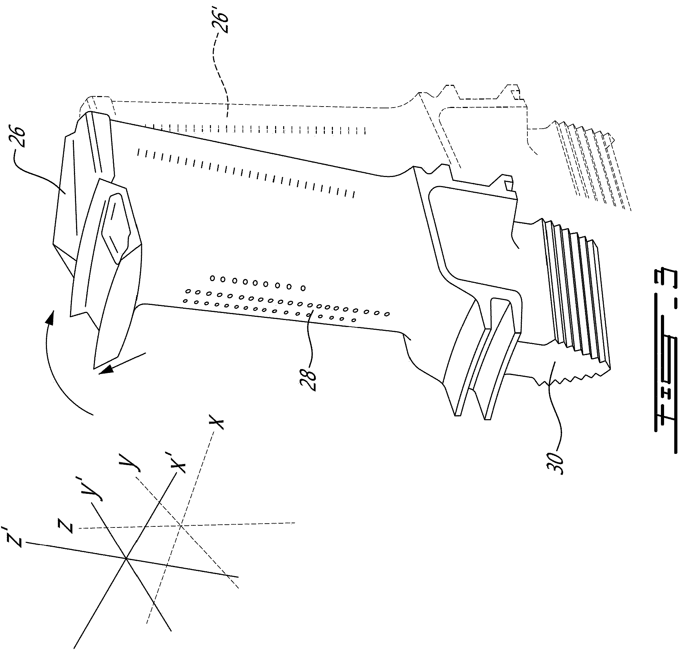

Fig. 3 presents an example of a part of an aircraft powerplant. In this example, the part is a blade 26. The part has a relatively complex geometry including an airfoil portion 28 and a root portion 30. In some cases, some features may be machined within tolerances relative to another one of the features. Indeed, the machining process of blade root, tip and cooling holes features of a blade, for instance, can be challenging and involve multiple machining steps in which each one requires a specific part, fixture setup and preparation. All machined features have to be very precise and well orientated relative to the airfoil portion 28, which in return will impact its positioning and fit when assembled in the engine 10. The latter will affect the engine performance (gap/leakage, vibration, etc.).

In some embodiments, such as in the example presented in Fig. 3, the specifications may set tolerances for the dimensions of a first portion of the part (e.g., the airfoil portion 28), and these tolerances may be set relative the position of a second portion of the part (e.g., the root portion 30). The second portion of the part (e.g., the root portion 30), relative to which the tolerances of the first portion of the part (e.g., the airfoil portion 28) are set, will be referred to herein as the machining reference feature. The first portion of the part to be machined within the tolerances will be referred to herein as the target feature. Mechanical devices referred to as fixtures may be used to hold a part during a machining operation. The fixtures may be mounted directly within the CNC machine 20, or integrated to a separate part, sometimes referred to as a pallet or sub-table, which can be removed from the CNC machine 20 to load or unload the clamp. The parts are typically held in the fixtures by clamping.

In some embodiments, the fixtures may be designed and constructed in a manner to set the position and orientation of the part very precisely in the coordinate system of the CNC machine 20. Taking the example above, a relatively complex machining fixture may be constructed in some embodiments, where the machining fixture precisely sets the position of a number of reference points of the external surface of the machining reference feature (e.g., the airfoil portion 28), which can allow to precisely set the position and orientation of the part relative the machining fixture. If the CNC machine 20 is calibrated in a manner for its coordinate system to match the coordinate system of the fixture, the precise setting of the position and orientation of the part in the machining fixture may correspond to a precise setting of the position and orientation of the part in the coordinate system of the CNC machine 20. Accordingly, the CNC machine 20 may then proceed to machining the target feature, say the root portion 30 of the part, based on tool paths which are defined within the instructions relative to its coordinate system, and the resulting position and orientation of the machined targeted feature of the part relative the position and orientation of the machining reference feature may then satisfy relatively strict tolerances.

In practice, such high-precision machining fixtures can be costly, particularly when there is a need to consider physical space, loads, stress, deformation, thermal effects, vibration, and the impact of loads and deflections arising from locating, clamping and machining procedures, and different fixturing systems are used for different parts (e.g., different part numbers), which can lead to high costs when considering all the fixturing systems required for all the different parts.

In some other embodiments, rather than using a high-precision machining fixture, a process referred to as encapsulation may be used. Such a technique can involve encapsulating a portion of the part in a sacrificial material which will be used for fixturing in a simpler machining fixture. The fixturing itself may not be precise in such cases, leading to a scenario where the exact position and orientation of the machining reference feature in the coordinate system of the CNC machine is not precisely known a priori. However, in some embodiments, this position and orientation may be acquired by measuring it. For instance, in some cases, a coordinate measuring machine (CMM) module 24 may be integrated to the CNC machine 20, allowing to move a probe to ascertain the exact position of a number of reference points of the machining reference feature in the coordinate system of the CNC machine 20. The position and orientation of the machining reference feature may be computed from the position of these reference points. Then, a correction to the coordinate system of the CNC machine 20 can be applied in a manner to re-frame the coordinate system of the CNC machine 20 in a manner to match the position and orientation of the machining reference feature.

For instance, if the computer-readable instructions defining machining steps of the CNC machine 20 define tool paths in a coordinate system which is defined relative the position and orientation of the root portion 30 of the blade (which can be referred to as a coordinate system or "reference frame" of the root portion), and it is found that the coordinate system has some translational and rotational offsets relative a base coordinate system of the CNC machine 20, a coordinate transformation can be applied to the base coordinate system of the CNC machine 20 to transform it into a corrected coordinate system, which now matches the coordinate system of the blade.

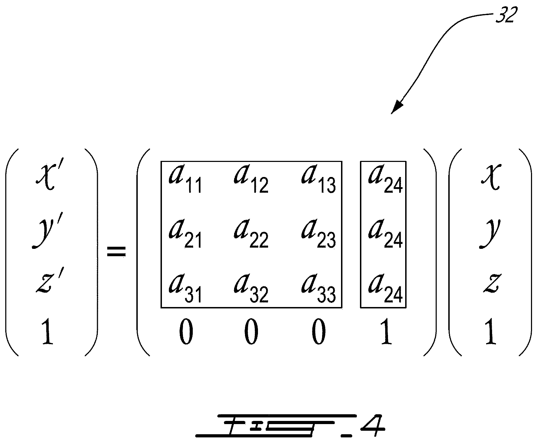

One way of applying a coordinate transformation is via a 4 X 4 matrix 32 for instance, such as shown in Fig. 4, where the transformation matrix 32 maps, with simultaneous reference to Fig. 3, a corrected position (x', y', z') to each original position (x, y, z), by way of a number of coefficients ($a_{11}$ to $a_{34}$). The matrix 32 can correspond to a re-orientation of an initial coordinate system (x, y, z) to a corrected coordinate system (x', y', z'). This can also correspond to changing the position and orientation of the part 26 from an initial position and orientation to a corrected position and orientation 26' in the reference system of the CNC machine. Applying the correction can alternately be referred to as applying offsets, or applying offset data. Indeed, the coordinate transformation may be entirely defined in some embodiments by the coefficients ($a_{11}$ to $a_{34}$) of the matrix, and the coefficients may be stored in non-transitory memory and referred to as offset data. Different types of coordinate transformation techniques may be used in different embodiments. For instance, if a coordinate system other than Cartesian is used, a coordinate transformation other than the afore-mentioned matrix may be preferable. In some embodiments, it may be preferred to use vectors rather than a matrix to establish a geometrical relationship, e.g., to provide a coordinate transformation. The matrix example is provided solely for illustrative purposes.

In some embodiments, an approach similar to the one above can be achieved in a somewhat more complex manner. Indeed, in some cases, it may be preferred to prepare a number of parts in corresponding machining fixtures outside the CNC machine 20, and to then transfer these parts, one by one, with the associated machining fixture, into the CNC machine for machining. Such mobile machining fixtures can having pallets. In such cases, the position and orientation of the machining reference feature may be determined relative the machining fixture (e.g., relative its pallet), outside the CNC machine 20. This can be achieved by probing both points on the reference feature and on the pallet with a dedicated CMM, for instance. Then, when the pallet is moved into the CNC machine 20, the position and orientation of the reference feature of the part may be ascertained either via precise positioning of the pallet into the CNC machine 20, or by probing the position of reference features of the machining fixture (e.g., of a portion of its pallet) via a CMM module 24 of the CNC machine 20, to name some examples.

The sacrificial encapsulation can be removed once the machining is completed. It will be understood that while such a technique can be satisfactory to a certain extent, there can be significant costs associated to the steps of encapsulating and removing the encapsulation, particularly when the computerized measurement is performed in a different fixture than the fixture used to hold the encapsulation during machining.

While the former technique can be suitable to a certain degree, its application may be limited to scenarios where the machining reference feature of the part is exposed in a manner to allow the measurement of the position of the reference points when the part is mounted to the machining fixture. However, in the case of some parts, the reference feature may be obstructed by the machining fixture when the part is held within it, and it may not be possible to ascertain the position and orientation of the reference feature directly.

It was found that in some embodiments, it was possible to overcome the afore-mentioned technical problem. In such embodiments, other features of the part may be accessible, one of which may be referred to as a setup reference feature for instance. The setup reference feature may have a position and orientation which is fixed relative a position and orientation of the machining reference feature. However, while the relative position and orientation may be fixed for a given part, it may vary from one instance of a given part to another (e.g., two instances of parts having the same part number) based on dimensional variations. At first glance, this variability leads the skilled reader to believe that the position and orientation of the setup reference feature cannot be used to ascertain the position and orientation of the machining reference feature, because they may be in coordinate systems which may relatively vary arbitrarily from one instance of a part to another. It was found that this variability could be overcome in some embodiments.

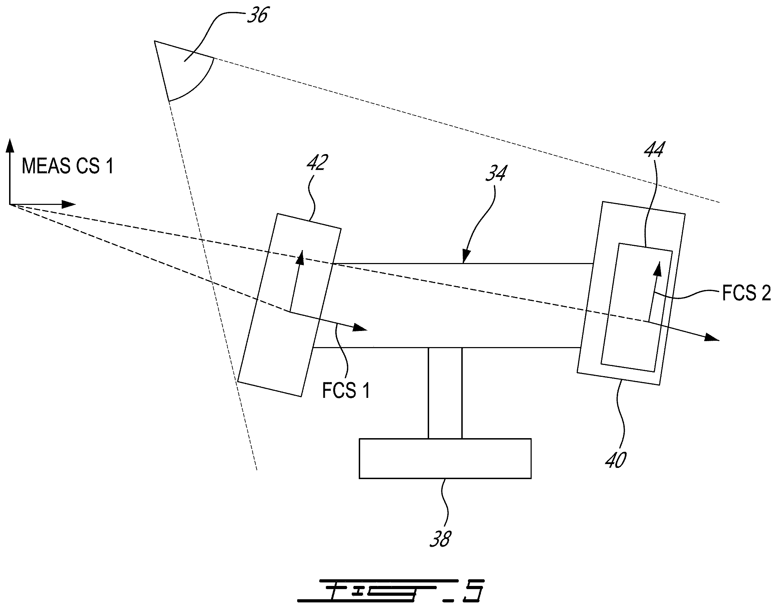

In some embodiments, as schematized in Fig. 5, this can be performed via a step of obtaining a geometrical relationship between a machining reference feature of the part and a setup reference feature of the part prior to machining.

As will be explained below, one way of obtaining the geometrical relationship is to use a tri-dimensional model of the part 34 in an initial configuration. Creating the tri-dimensional model can include scanning the part 34. Scanning the part 34 can be performed with a measurement device such as an optical scanner 36 for instance. Another way of determining the geometrical relationship, or of obtaining a tri-dimensional model of the part 34, is by probing. For instance, probing can measure the position of a certain number of points on the part, such as 10 points for instance, and a best fit may be performed based on reference data pertaining to the geometry(ies) of the feature(s) and the measured points. During the scanning or probing, the part 34 may be held in an inspection fixture 38, or in some cases simply laid on a flat table, for instance, rather than be held in a machining fixture. Both the setup reference feature 40 and the machining reference feature 42 may be exposed. The tri-dimensional model of the part 34 can be partial (e.g., include only some external surfaces of the part, such as only the setup reference feature 40 and the machining reference feature 42 in one embodiment) or complete (e.g., include all the external surface of the part 34). Referring back to the example part shown in Fig. 3, where the part 34 is a blade 26, the setup reference feature 40 may be a tip of the blade, for instance. The setup reference feature 40 can be a portion of the part 34 which is removed during machining to reveal the target feature 44. The tri-dimensional model can include the machining reference feature 42, such as the airfoil portion 28 of the blade for instance, and the setup reference feature 40, such as the tip of the blade 26 for instance. The tri-dimensional model can be stored in a non-transitory memory and referred to as inspection data. The inspection data may be acquired via a probe measurement instead of by scanning. At this point, when the part 34 is in the initial configuration, the targeted feature 44 of the part, which may be a root portion 30 of the blade 26 for instance, may not yet exist, as it may not yet have been machined.

The surface geometries of the setup reference feature 40 and of the machining reference feature 42 can be extracted from the tri-dimensional model, and the information pertaining to the actual relative position and orientation of (e.g., geometrical relationship between) the setup reference feature 40 relative the machining reference feature 42, may be computed from the surface geometries. In some embodiments, the geometrical relationship between the setup reference feature 40 and the machining reference feature 42 may be defined in the form of a coordinate transformation, such as another coordinate transformation matrix. This is not the same coordinate transformation matrix as the one evoked above and can be referred to as the second, or setup coordinate transformation, by contradistinction with the first coordinate transformation referred to above which may alternately be referred to as the machine coordinate transformation.

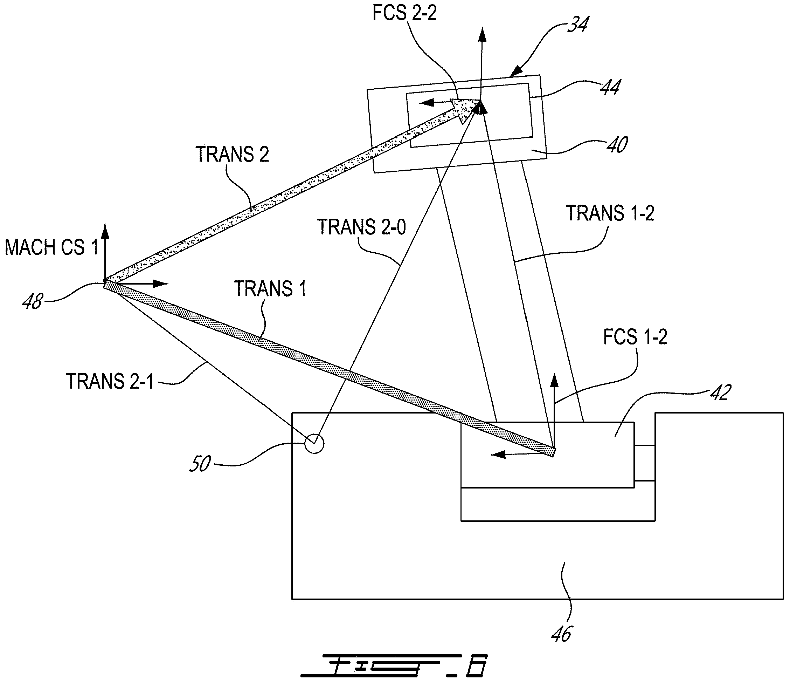

Following the acquisition of the inspection data, the part 34 can be moved and mounted to a machining fixture 46 as shown in Fig. 6. The machining reference feature 42 may then be obstructed by the machining fixture 46, and not be directly accessible to a measurement system such as a CMM module 24. Even when the machining reference feature 42, say the root portion 30 of the part 34, is obstructed by the machining fixture 46 when the part 34 is in the machining fixture 46, the position and orientation of the machining reference feature 42 may yet be ascertained, in a somewhat indirect manner, as will now be exemplified. Indeed, in some examples, the position and orientation of the setup reference feature 40 (e.g., the tip of the blade) can be ascertained, relative the machining fixture 46, by measuring. For instance, the position and orientation of the setup reference feature 40 can be measured using a CMM module 24 of the CNC machine 20. From this position and orientation, knowing the geometrical relationship between the setup reference feature 40 relative the machining reference feature 42, a succession of two coordinate transformations can be applied in a manner to achieve the desired correction of the coordinate system of the CNC machine 20 : the second (setup) coordinate transformation, which negates or alleviates any dimensional variation which may occur between the position and orientation of the setup reference feature 40 and the position and orientation of the machining reference feature 42, and the first (machine) coordinate transformation, which negates or alleviates any dimensional variation which may occur in the position and orientation of the machining reference feature 42 in the coordinate system 48 (Mach CS 1) of the CNC machine 20.

To better illustrate this process, let us now refer to a more detailed example.

Referring to Fig. 6, in this example, a first coordinate system FCS1 can be associated to the machining reference feature 42, and a second coordinate system FCS2 can be associated to the setup reference feature 40. From the inspection data, the relation between FCS1 and FCS2 can be computed using a relationship such as :

$$FCS1 = F\ (FCS2) \hspace{4cm} (eq.\ 1)$$

The associated machining offsets, or coordinate transformations, corresponding to the relation F, when in cartesian coordinates, can be represented by a 4X4 transformation matrices which can contain coordinate transformations, and referred to herein as TRANS 1-2. For instance, eq. 1, above, can be described as for any point, the coordinate in one coordinate system can be computed from the equation presented in Fig. 4. This equation can contain the rotation and the translation relation between the two coordinate systems. The relationship F can set out the associated indices $a_{11}$ to $a_{34}$ associated to the second coordinate transformation.

Once the inspection data has been acquired, the part 34 can be moved and mounted to a machining fixture 46 such as represented in Fig. 6. In some embodiments, the machining fixture 46 may be disposed inside a CNC machine 20 when the part is clamped into it. The machining fixture 46 may obstruct the machining reference feature 42, while exposing the setup reference feature 40. The machining fixture 46 may have some degree of imprecision in terms of holding the machining reference feature 42 in a given position and orientation relative the initial coordinate system of the CNC machine 20. However, this imprecision can be significantly factored out in some embodiments by ascertaining the position of the setup reference feature 40 relative the machining fixture 46. Indeed, the position and orientation of the setup reference feature 40 can be measured by probing via a CMM module 24 integrated to the CNC machine 20, or by scanning and computing the scan data, for instance.

Based on the measured position and orientation of the setup reference feature 40 relative the machining fixture 46 (and in this case, the initial reference frame of the CNC machine 20), a position and orientation of the machining reference feature 42 can be computed based on the coordinate transformation TRANS 1-2 acquired above. The coordinate transformation can then be applied to the initial reference frame of the CNC machine 20, producing a corrected, or offset reference frame, and the machining steps can then be executed to machine the target feature of the part 34 relative to the computed position and orientation of the machining reference feature 42, based on the corrected reference frame.

More specifically, referring to Fig. 6, in some embodiments, this can involve probing a few points of the setup reference feature 40. Then a transformation of coordinates FCS 1-2 can be performed to locate the machining reference feature 42 based on

$$\text{TRANS 1} = (\text{TRANS 2}) + (\text{TRANS 1-2}) \qquad \text{eq. 3}$$

In mathematical expression, using matrices, eq. 3 can be written as:

$$M1 = M2 \times M12 \qquad \text{eq. 4}$$

The target transformation matrix M1 in Fig. 6 can be represented by TRANS 1. M1-2 can be the transformation matrix of the setup reference feature relative to the machine reference feature. M2 can be the transformation matrix of the machine reference feature relative to the coordinate system MACH CS 1 of the CNC machine 20.

In some embodiments, the machining fixture 46 may be disposed outside the CNC machine 20, and may incorporate a pallet allowing to facilitate the loading, positioning and orienting of the machining fixture 46 in the CNC machine 20, for instance. In such an embodiment, the measuring of the position and orientation of the setup reference feature 40 can be specifically relative to a fixture reference feature 50, a further coordinate transformation, which can be referred to here as TRANS 2-0, between the fixture reference feature 50 and the setup reference feature 40, can be computed, in addition to the coordinate transformation TRANS 1-2 referred to above. For instance, the measurements pertaining to the position and orientation of the part 34 relative the machining fixture 46 can be made outside the CNC machine 20, by a measuring system which is external to the CNC machine, such as a dedicated CMM for instance. The machining fixture 46 can then be mounted (loaded) with the part 34 into the CNC machine 20, and information acquired from the measuring step can be communicated to the CNC machine 20, such as via a wired or wireless data transfer. The position and orientation of the fixture reference feature 50 can then be measured relative the CNC machine 20 (e.g., in the initial frame of reference of the CNC machine). The computing of a position and orientation of the machining reference feature 42 can further be based on the coordinate transformation TRANS 2-0 between the fixture reference feature 50 and the setup reference feature 40 and the measurement of the position and orientation of the machining fixture 46 relative the CNC machine 20 TRANS 2-1.

Indeed, the part 34 and the fixture 46 can be measured outside the machining area, and the measurement can be performed for both the part 34 and the fixture 46 (e.g., by probing or scanning). The resulting inspection data can be processed to compute the reference frame associated to the setup reference feature 40 relative the coordinate system of the fixture reference feature 50.

In this case, the correction to the coordinate system MACH CS 1 of the CNC machine 20 may be computed as:

$$M1 = M21(\text{TRANS2-1}) \times M20(\text{TRANS 2-0}) \times M12 \,(\text{TRANS 1-2}) \qquad \text{eq. 5}$$

M1 can be a resulting transformation matrix stored in the non-transitory memory of the controller, or CNC module 22, of the CNC machine 20 associated to the part ID information.

M21 can be the transformation matrix responsible of compensating for the actual location and orientation of the machining fixture 46 (e.g., pallet) relative to the machine 20. The location can be measured by probing after each load of the machining fixture 46. If it is repeating, it can be measured one time and stored in the machine data based on the machining fixture ID.

M20 can be the transformation matrix responsible for compensating for the actual location and orientation of the part 34 in the machining fixture 46.

M12 can be the transformation matrix responsible for compensating for the actual location and orientation of the setup reference feature 40 relative the machining reference feature 42.

In either case, once the coordinate system of the CNC machine 20 has been corrected by applying the M1 matrix, the target feature 44 can be machined, using the CNC machine, and more specifically via the controller (e.g. CNC module 22) of the CNC machine 20 driving the cutter in the corrected coordinate system. The machining of the targeted feature 44 may remove some or all of the material which previously formed the setup reference feature 40.

If the CNC machine 20 has an integrated inspection module, such as a CMM module for instance, the coordinate system of the inspection module may be shared with the coordinate system of the CNC machine 20. Accordingly, the inspection (CMM) module may then proceed inspect the target feature 44 which has just been machined directly (at which point setup reference feature 40 may or may no longer exist), in the corrected coordinate system implemented using the process described above.

It will be understood that the different process steps presented above can be executed by a computer which can be integrated to a CNC machine, integrated to a CMM, and/or a computing device distinct from the CNC machine.

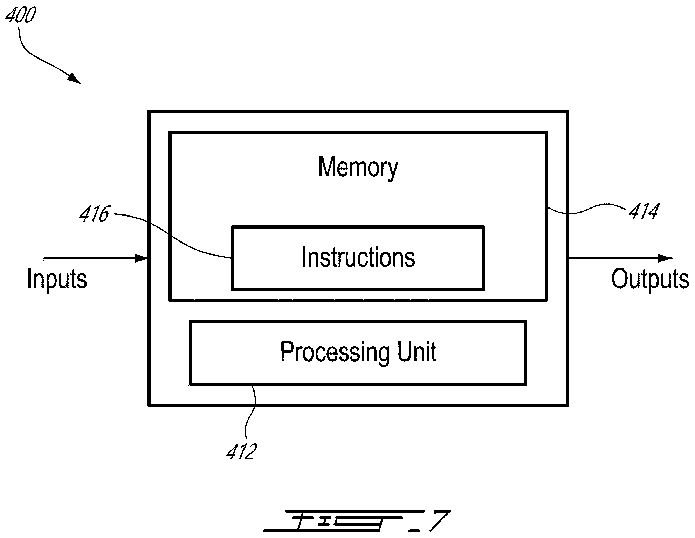

Referring to Fig. 7, it will be understood that the expression "computer" 400 as used herein is not to be interpreted in a limiting manner. It is rather used in a broad sense to generally refer to the combination of some form of one or more processing units 412 and some form of memory 414 accessible by the processing unit 412. The memory system can be of the non-transitory type. The use of the expression "computer" in its singular form as used herein includes within its scope one or more processing units working to perform a given function.

The computer 400 comprises a processing unit 412 and a memory 414 which has stored therein computer-executable instructions 416. The processing unit 412 may comprise any suitable devices configured to implement a method such that instructions, when executed by the computer(s) or other programmable apparatus, may cause the functions/acts/steps performed to control the mode of operation of the engine to be executed. The processing unit 412 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory may comprise any storage means (e.g., devices) suitable for retrievably storing machine-readable instructions 506 executable by processing unit.

Looking into some of these steps in greater detail, the following additional examples will now be provided. More specifically, the step of determining the coordinate transformation between the reference machining feature (e.g., first feature for short) and the setup reference feature (e.g., second feature for short) can be based on a step of measuring the relative geometry of the first feature and the second feature. This can involve reading the part information, loading the part on a measuring fixture, measuring the reference feature, measuring the setup feature (e.g., by scanning or probing), processing the data, and computing the coordinate transformation matrix M1 based on equation 4. M1 can then be stored in non-transitory memory and referred to here as Msetup_ref.

Then, the process may proceed to the following steps in the scenarios where the subsequent measurement is made when the machining fixture is inside the CNC machine.

A next step in the process can be the measurement of the part on the machining fixture using an integrated measuring system. The process can start by reading the part information, loading the part on the machining fixture, loading the machining fixture on the machine workstation, perform the measurement of a position and orientation of the setup reference feature (second feature) relative the machining fixture/CNC machine, process the data, and compute the setup feature location relative the coordinate system of the machine (Msetup_mach). Part information such as serial number can be helpful for tracking multi-parts machining. The setup feature can be the target feature before machining.

Then, the processor can read Msetup_mach and Msetup_ref, and compute the reference feature location relative the machine coordinate syste Mref_mach from the two afore-mentioned data. Mref_mach can be the transformation of the coordinate system that defines the relationship between the reference feature and the machine reference system. This relationship can be used to drive the cutting tool in a path defined in a reference frame attached to the reference feature. The transformation matrix can be used to change the reference system.

Alternately, the process may proceed to the following steps in the scenarios where the subsequent measurement is made when the machining fixture is not inside the CNC machine 20.

A next step of the process, in this scenario, can be the measurement of the part relative to the fixture (pallet), on a machining fixture using an external measuring system. The process can start by reading the part information, loading the part on the machining fixture, optionally loading the fixture portion of the fixture on the pallet, measure the part setup feature, measure or read the pallet location data relative the measuring system, process the data, and compute the setup feature location relative to the fixture (Msetup_fixture). Msetup_fixture can be the transformation of coordinate that defines the relationship between the setup feature and the pallet reference system.

The process may then proceed to read fixture information. When the pallet positioning is repeatable, such as if the clamping system is repeating with acceptable variation, the reference frame of the pallet can be called and activated based on the pallet ID, and the process can proceed to read the positioning offset relative to the machine reference system (Mmach_fixture). If not, the pallet may be measured (e.g., probed) using an integrated measuring system, and the pallet reference offset relative the machine can be computed from the measurement to achieve Mmach_fixture. The setup feature relative the pallet can be red (Msetup_pallet), and the reference feature offsets relative to the machine can be computed (Mref_mach), and recorded, such as by being stored in non-transitory memory.

In either case, in some embodiments, the process can then proceed to a step of machining the part which can include activating the reference frame offset Mref_mach, loading the numerical command (NC) program generated to machine the target feature relative to the reference feature, and run the NC program such that the tool pathy is adjusted by the NC control to take into account the positioning error of the part (Mref_mach). The CNC machine can be adapted to drive the tool in a path defined in a reference frame which is not necessarily orthogonal to the machine. For instance the CNC machine may be a 5 axis machine having a 3D orientation capability.

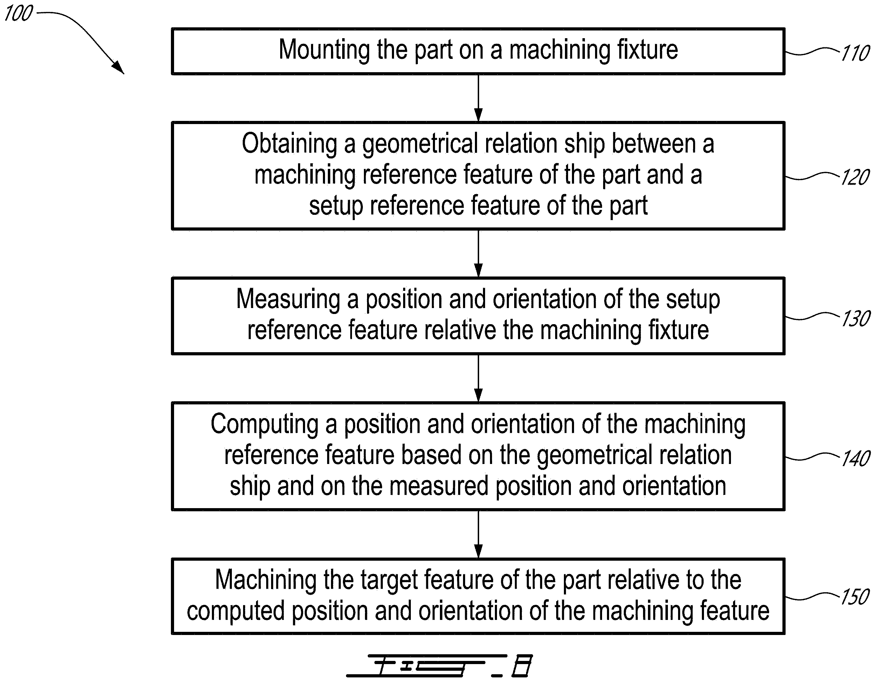

Accordingly, with reference to Fig. 8 a method 100 of manufacturing a target feature 44 of a part 34 of an aircraft powerplant 10 can include the following steps : using the tri-dimensional model, determining 110 a geometrical relationship between a machining reference feature 42 of the part 34 and a setup reference feature 40 of the part 34; mounting 120 the machining reference feature 42 of the part 34 in a machining fixture 46; measuring 130 a position and orientation of the setup reference feature 40 of the part relative the machining fixture 46; computing 140 a position and orientation of the machining reference feature 42 based on the measured position and orientation of the setup reference feature 40 and on the geometrical relationship; and machining 150 a target feature 44 of the part 34 relative to the computed position and orientation of the machining reference feature 42.

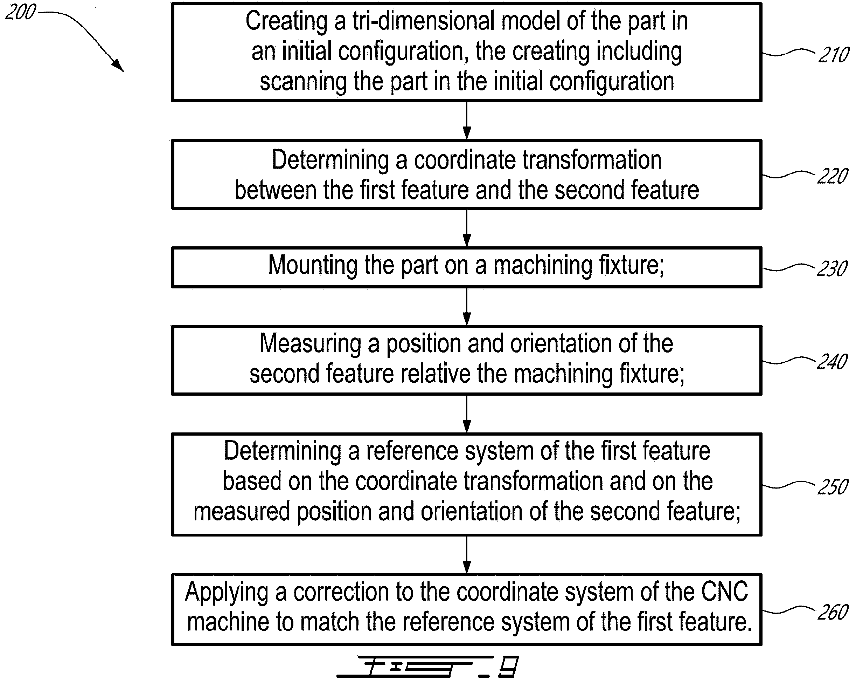

Moreover, with reference to Fig. 9, a method 200 of manufacturing a part can include : creating 210 a tri-dimensional model of the part 34 in an initial configuration, the creating including scanning the part in the initial configuration, the tri-dimensional model of the part 34 including surfaces of a first feature 42 and of a second feature 40; determining 220 a coordinate transformation between the first feature 42 and the second feature 40; mounting 230 the part on a machining fixture 46; measuring 240 a position and orientation of the second feature 40 relative the machining fixture 46; determining 250 a coordinate system of the first feature 42 based on the coordinate transformation and on the measured position and orientation of the second feature 40; and applying 260 the correction to the coordinate system of the CNC machine 20 to match the coordinate system of the first feature 42.

The methods and systems for controlling the engine described herein may be implemented in a high level procedural or object oriented programming or scripting language, or a combination thereof, to communicate with or assist in the operation of a computer system, for example the computer(s). Alternatively, the methods and systems may be implemented in assembly or machine language. The language may be a compiled or interpreted language. Program code for implementing the methods and systems may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

While the description may present method and/or process steps as a particular sequence, it is understood that to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. As used herein, the term "about" is intended to allow for a 10% variation of the associated numerical values.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Other applications would be recognized by the person of ordinary skill in the art and are considered to be within the scope of the present disclosure. Yet further modifications could be implemented by a person of ordinary skill in the art in view of the present disclosure, which modifications would be within the scope of the present technology.

## Claims

1. A method of manufacturing a part (34) for an aircraft powerplant (10), the method comprising :

   determining a geometrical relationship between a machining reference feature (42) of the part (34) and a setup reference feature (40) of the part (34);
   mounting the machining reference feature (42) of the part (34) in a machining fixture (46);
   measuring a position and orientation of the setup reference feature (40) of the part (34) relative the machining fixture (46);
   computing a position and orientation of the machining reference feature (42) based on the measured position and orientation of the setup reference feature (40) and on the geometrical relationship; and
   machining a target feature (44) of the part (34) relative to the computed position and orientation of the machining reference feature (42).

2. The method of claim 1, further comprising computing a coordinate transformation between the machining reference feature (42) and the setup reference feature (40), said determining the geometric relationship being based on the coordinate transformation.

3. The method of claim 1 or 2, further comprising obtaining a tri-dimensional model created by scanning the part (34), the tri-dimensional model of the part (34) including surfaces of the machining reference feature (42) and of the setup reference feature (40), and wherein said determining the geometrical relationship is based on the tri-dimensional model of the part (34),

4. The method of claim 3, wherein:

the tri-dimensional model is a partial tri-dimensional model of the part (34); and/or
the method further comprises extracting a position and orientation of the machine (20) reference feature and of the setup reference feature (40) from the tri-dimensional model.

5. The method of any preceding claim, wherein said measuring is performed using a computer measurement machine (CMM) module (24) integrated to a computer numerical command (CNC) machine (20), said machining is performed using the CNC machine (20), said measuring is performed using the CMM module (24), further comprising measuring the target feature (44) of the part (34) using the CMM module (24), relative to the computed position and orientation of the machining reference feature (42).

6. The method of any preceding claim, wherein said machining fixture (46) is in a computer numerical command (CNC) machine (20) when performing said measuring, and said machining is performed using the CNC machine (20).

7. The method of any preceding claim, wherein said machining fixture (46) is located outside a computer numerical command (CNC) machine (20) when performing said mounting, further comprising computing a coordinate transformation between a fixture reference feature (50) and the setup reference feature (40), mounting the machining fixture (46) with the part (34) into the CNC machine (20), measuring a position and orientation of the fixture reference feature (50) relative the CNC machine (20), and wherein said computing a position and orientation of the machining reference feature (42) is further based on the coordinate transformation between the fixture reference feature (50) and the setup reference feature (40) and the measurement of the position and orientation of the machining fixture (46) relative the CNC machine (20).

8. The method of any preceding claim, wherein said measuring a position and orientation of the setup reference feature (40) includes probing the position of points on a surface of the setup reference feature (40).

9. The method of any preceding claim, wherein said geometrical relationship is a 4 X 4 coordinate transformation matrix (32) between a coordinate system of the machining reference feature (42) and of a coordinate system of the setup reference feature (40).

10. The method of any preceding claim, wherein said mounting the part (34) to a machining fixture (46) includes obstructing access to the machining reference feature (42).

11. A method of manufacturing a part (34) for an aircraft powerplant (10), the method comprising :

creating a tri-dimensional model of the part (34) in an initial configuration, the creating including scanning the part (34) in the initial configuration, the tri-dimensional model of the part (34) including surfaces of a first feature (42) and of a second feature (40);
determining a coordinate transformation between the first feature (42) and the second feature (40);
mounting the part (34) on a machining fixture (46);
measuring a position and orientation of the second feature (40) relative the machining fixture (46);
determining a coordinate system of the first feature (42) based on the coordinate transformation and on the measured position and orientation of the second feature (40); and
applying a correction to the coordinate system of the CNC machine (20) to match the coordinate system of the first feature (42), optionally further comprising:
extracting a position and orientation of the first feature (42) and of the second feature (40) from the tri-dimensional model.

12. The method of claim 11, further comprising machining a target feature (44) of the part (34) based on the corrected coordinate system of the CNC machine (20), optionally wherein said measuring is performed using a computer measurement machine (CMM) module (24) integrated to the computer numerical command (CNC) machine (20), said machining is performed using the CNC machine (20), further comprising measuring the target feature (44) of the part (34) using the CMM module (24), relative to the corrected coordinate system of the CNC machine (20).

13. The method of claim 11 or 12 wherein:

said measuring a position and orientation of the second feature (40) includes probing the position of points on a surface of the second feature (40); and/or
said coordinate transformation is a 4 X 4 transformation matrix (32) between a coordinate system of the first feature (42) and of a coordinate system of the second feature (40).

14. The method of any of claims 11 to 13 wherein:

the tri-dimensional model is a partial tri-dimensional model of the part (34); and/or
said mounting the part (34) on the machining fixture (46) includes obstructing access to the first feature (42).

15. A system for preparing machining of a part (34), the system comprising:

a processor; and
a non-transitory machine-readable memory operatively connected to the processor, and storing :

a coordinate transformation between a machining reference feature (42) and a setup reference feature (40) of a part (34);
a measurement of a position and orientation of the setup reference feature (40) relative a machining fixture (46); and
instructions executable by the processor and configured to cause the processor to:

compute a coordinate system of the machining reference feature (42) based on the coordinate transformation and on the measured position and orientation of the setup reference feature (40); and
apply a coordinate transformation to the coordinate system of a CNC machine (20) to match the coordinate system of the machining reference feature (42).

FIG. 1

FIG.2

EP 4 660 726 A1

FIG.3

$$\begin{pmatrix} x' \\ y' \\ z' \\ 1 \end{pmatrix} = \begin{pmatrix} \boxed{\begin{matrix} a_{11} & a_{12} & a_{13} \\ a_{21} & a_{22} & a_{23} \\ a_{31} & a_{32} & a_{33} \end{matrix}} & \boxed{\begin{matrix} a_{24} \\ a_{24} \\ a_{24} \end{matrix}} \\ 0 \quad 0 \quad 0 & 1 \end{pmatrix} \begin{pmatrix} x \\ y \\ z \\ 1 \end{pmatrix}$$

_32_

FIG. 4

MEAS CS 1

FCS 1

FCS 2

36

42

34

44

40

38

_FIG.5_

EP 4 660 726 A1

17

FIG. 6

400

Memory

416

Instructions

Inputs

Outputs

414

Processing Unit

412

FIG. 7

100

110 — Mounting the part on a machining fixture

120 — Obtaining a geometrical relation ship between a machining reference feature of the part and a setup reference feature of the part

130 — Measuring a position and orientation of the setup reference feature relative the machining fixture

140 — Computing a position and orientation of the machining reference feature based on the geometrical relation ship and on the measured position and orientation

150 — Machining the target feature of the part relative to the computed position and orientation of the machining feature

FIG. 8

Creating a tri-dimensional model of the part in an initial configuration, the creating including scanning the part in the initial configuration — 210

Determining a coordinate transformation between the first feature and the second feature — 220

Mounting the part on a machining fixture; — 230

Measuring a position and orientation of the second feature relative the machining fixture; — 240

Determining a reference system of the first feature based on the coordinate transformation and on the measured position and orientation of the second feature; — 250

Applying a correction to the coordinate system of the CNC machine to match the reference system of the first feature. — 260

200

FIG. 9

Europäisches
Patentamt

European
Patent Office

Office européen
des brevets

## EUROPEAN SEARCH REPORT

**Application Number**

EP 25 18 0872

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 937 754 A1 (BAE SYSTEMS PLC [GB]) 28 October 2015 (2015-10-28) | 1,2,6, 8-11, 13-15 | INV. G05B19/401 |
| Y | * paragraphs [0016] - [0026], [0033] - [0080] * | 5,12 | |
| Y | EP 4 231 103 A1 (PRATT & WHITNEY CANADA [CA]) 23 August 2023 (2023-08-23) * paragraphs [0024] - [0026] * | 5,12 | |
| X | EP 3 189 933 B1 (ROLLS ROYCE PLC [GB]) 29 August 2018 (2018-08-29) * paragraphs [0016], [0026] - [0036], [0043], [0047] - [0060] * | 1-4, 7-11, 13-15 | |

**TECHNICAL FIELDS SEARCHED (IPC)**

G05B

The present search report has been drawn up for all claims

| Place of search | Date of completion of the search | Examiner |
|---|---|---|
| The Hague | 9 October 2025 | Prokopiou, Platon |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 0872

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | | Publication date | Patent family member(s) | | Publication date |
|---|---|---|---|---|---|
| EP 2937754 | A1 | 28-10-2015 | NONE | | |
| EP 4231103 | A1 | 23-08-2023 | CA | 3189477 A1 | 18-08-2023 |
| | | | EP | 4231103 A1 | 23-08-2023 |
| | | | US | 2023266736 A1 | 24-08-2023 |
| EP 3189933 | B1 | 29-08-2018 | EP | 3189933 A1 | 12-07-2017 |
| | | | GB | 2546107 A | 12-07-2017 |
| | | | SG | 10201610932T A | 30-08-2017 |
| | | | US | 2017200287 A1 | 13-07-2017 |

EPO FORM P0459

For more details about this annex : see Official Journal of the European Patent Office, No. 12/82